# EUROPÄISCHE PATENTSCHRIFT

(11) **EP 1 864 155 B1**
(45) Veröffentlichungstag und Bekanntmachung des Hinweises auf die Patenterteilung: **15.07.2009**
(21) Anmeldenummer: 06708607.4
(22) Anmeldetag: 02.03.2006
(51) Int. Cl.: G01S 13/34

(54) **VERFAHREN UND VORRICHTUNG ZUR ABSTANDS- UND RELATIVGESCHWINDIGKEITSMESSUNG MEHRERER OBJEKTE**
METHOD AND DEVICE FOR MEASURING DISTANCE AND RELATIVE SPEED OF A PLURALITY OF OBJECTS
PROCEDE ET DISPOSITIF DE MESURE DE DISTANCE ET DE VITESSE RELATIVE DE PLUSIEURS OBJETS

(30) Priorität: 21.03.2005 DE 102005012945
(43) Veröffentlichungstag der Anmeldung: 12.12.2007
(73) Patentinhaber: ROBERT BOSCH GMBH, 70442 Stuttgart (DE)
(72) Erfinder: LEHRE, Klaus, 76316 Malsch (DE); WACKERL, Oliver, 73230 Kirchheim An Der Teck (DE); HILSEBECHER, Joerg, 70839 Gerlingen (DE); HAUK, Joachim, 71272 Renningen-Malmsheim (DE); REICHE, Martin, 71263 Weil Der Stadt (DE); RANDLER, Martin, 88090 Immenstaad (DE); JORDAN, Ruediger, 70435 Stuttgart (DE)
(86) Internationale Anmeldenummer: PCT/EP2006/060404
(87) Internationale Veröffentlichungsnummer: WO 2006/100167

(56) Entgegenhaltungen:
- DE-A1- 10 012 113
- DE-A1- 10 026 032
- DE-A1- 19 922 411
- US-A1- 2004 257 266

## Beschreibung

Die vorliegende Erfindung betrifft ein Verfahren und eine Vorrichtung zur Abstands- und Relativgeschwindigkeitsmessung von mehreren Objekten mittels eines FMCW-Radars, in dem Sendesignale mit zeitlich linearen Frequenzrampen abgestrahlt werden und die an Objekten reflektierten Empfangssignale empfangen werden und mit den Sendesignalen gemischt werden. Den Mischerausgangsfrequenzen einer jeden Frequenzrampe für jedes Objekt wird eine Kombination von Abstands- und Relativgeschwindigkeitswerten zugeordnet und aus Schnittpunkten mehrerer Abstands- und Relativgeschwindigkeitskombinationen der Abstand und die Relativgeschwindigkeit eines möglichen Objekts bestimmt, wobei die möglichen Objekte in Folge von Mehrdeutigkeiten Scheinobjekte oder reale Objekte sein können. Die Scheinobjekte in Folge der Mehrdeutigkeiten werden eliminiert, indem in einem darauf folgenden Messzyklus die Frequenzsteigung mindestens einer Frequenzrampe nach dem Zufallsprinzip geändert wird.

### Stand der Technik

Aus der DE 100 26 032 ist ein Verfahren zur Messung von Abstand und Relativgeschwindigkeit mittels eines FMCW-Radars gemäß dem Oberbegriff des Anspruchs 1 bekannt.

Aus der DE 42 42 700 A1 ist ein Verfahren zur Messung des Abstandes und der Geschwindigkeit von Objekten mit Hilfe elektromagnetischer Wellen bekannt, bei dem die Frequenz eines ausgesendeten Signals moduliert wird. Die während eines Anstiegs und eines Abfalls der Frequenz des ausgesendeten Signals empfangenen Signale werden mit dem ausgesendeten Signal gemischt und die durch die Mischung entstandenen Zwischenfrequenzsignale spektral analysiert werden. Aus der Frequenz von Spektrallinien der Zwischenhequenzsignale während mindestens eines Anstiegs und mindestens eines Abfalls der Frequenz des ausgesendeten Signals werden der Abstand und die Geschwindigkeit mindestens eines Objekts berechnet.

Bei diesem Verfahren entsteht bei jeder Frequenzrampe und für jedes detektierte Objekt eine Zwischenfrequenz, deren Frequenzlage einer Kombination aus Abstands- und Relativgeschwindigkeitswerten zugeordnet werden kann. Durch die Kombination dieser Zwischenfrequenzsignale und der damit verbundenen Abstands- und Relativgeschwindigkeitswerte entstehen gemeinsame Schnittpunkte, die beispielsweise in einem Abstands-Relativgeschwindigkeits-Diagramm dargestellt werden können. Diese Schnittpunkte repräsentieren die gemessenen Abstände und Relativgeschwindigkeiten der Objekte. Bei der Detektion mehrerer Objekte, beispielsweise zweier Objekte, entstehen jedoch insgesamt vier Schnittpunkte, wobei zwei dieser Schnittpunkte reale Objekte repräsentieren und weitere zwei Schnittpunkte Scheinobjekte sind, die in Folge von Mehrdeutigkeiten entstehen. Um derartige Mehrdeutigkeiten ausschließen zu können, wurde das FMCW-Radarverfahren derart weiterentwickelt, dass hintereinander mehrere Frequenzsteigungen und Frequenzgefälle aneinander gereiht werden, wobei die Frequenzrampen unterschiedliche Steigungen aufweisen. In der Realität kann es jedoch auch bei diesem weiterentwickelten Verfahren zu Situationen kommen, in denen derartige Scheinobjekte in Folge mehrerer detektierter Objekte über viele Messzyklen erkannt werden und als reales Objekt verarbeitet werden, da diese Scheinreflexe über lange Zeit erhalten bleiben. Insbesondere in Verkehrsituationen, in denen die mehreren detektierten Objekte sich mit der gleichen Dynamik bewegen, d.h. wenn sich die Abstände und Relativgeschwindigkeiten der mehreren Objekte über der Zeit nur sehr langsam ändern, können gleich bleibende Scheinobjekte über viele Messzyklen erhalten bleiben, da diese durch Trackingverfahren als reale Objekte erkannt und verarbeitet werden, obwohl diese Scheinobjekte sind.

### Kern und Vorteile der Erfindung

Der Kern der vorliegenden Erfindung ist es, ein Verfahren und eine Vorrichtung zur Abstands- und Relativgeschwindigkeitsmessung von mehreren Objekten mittels eines FMCW-Radars anzugeben, wobei Objekte innerhalb kurzer Zeit als reales Objekt oder Scheinobjekt erkannt werden und diese Erkennung mit sehr hoher Sicherheit erfolgt. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise erfolgt die Änderung der Frequenzsteigung der mindestens einen Frequenzrampe derart, dass aus mehreren vorgegebenen Frequenzsteigungen zufällig eine Frequenzsteigung ausgewählt wird. Weiterhin ist es vorteilhaft, dass die Frequenzsteigungen aller Frequenzrampen des Sendesignals nach dem Zufallsprinzip ausgewählt werden.

Vorteilhafterweise sind mehrere Frequenzsteigungsmuster für Messzyklen abgespeichert, aus denen nach dem Zufallsprinzip eines der Frequenzsteigungsmuster ausgewählt wird.

Vorteilhafterweise wird das Verfahren in einem Kraftfahrzeug zur adaptiven Abstandsregelung und/oder zur Auslösung einer automatischen Notbremsung verwendet.

Weiterhin ist es vorteilhaft, dass die Änderung der Frequenzsteigung der mindestens einen Frequenzrampe derart erfolgt, dass aus mehreren in einem Speicher abgespeicherten Frequenzsteigungen mittels des Zufallsgenerators eine Frequenzsteigung ausgewählt wird.

Vorteilhafterweise werden die Frequenzsteigungen aller Frequenzrampen des Sendesignals mittels des Zufallsgenerators ausgewählt.

Vorteilhafterweise sind in einem Speicher mehrere Frequenzsteigungsmuster für Messzyklen abgespeichert, aus denen mittels des Zufallsgenerators eines der Frequenzsteigungsmuster ausgewählt wird.

Besonders vorteilhaft ist die Vorrichtung zur adaptiven Abstandsregelung und/oder zur Auslösung einer automatischen Notbremsung an einem Kraftfahrzeug vorgesehen.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, sodass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in den Zeichnungen.

### Zeichnungen

Nachfolgend werden Ausführungsbeispiele der Erfindung anhand von Zeichnungen erläutert. Es zeigen:
- Figur 1a: ein Frequenz-Zeit-Diagramm eines FMCW-Sendesignals mit zwei Frequenz- rampen,
- Figur 1b: ein zugehöriges Relativgeschwindigkeits-Abstands-Diagramms eines FMCW- Radars mit zwei Frequenzrampen, mittels dem zwei Objekte detektiert wur- den,
- Figur 2: ein schematisches Blockschaltbild einer Ausführungsform der erfindungsge- mäßen Vorrichtung,
- Figur 3a: ein Frequenz-Zeit-Diagramm einer Ausführungsform des erfindungsgemäßen Verfahrens zu einem ersten Zeitpunkt t=t₀,
- Figur 3b: ein Relativgeschwindigkeits-Abstands-Diagramm zum Messzeitpunkt t=t₀,
- Figur 4a: ein Frequenz-Zeit-Diagramm der Ausführungsform des erfindungsgemäßen Verfahrens zu einem späteren Zeitpunkt t=t₀+Δt und
- Figur 4b: ein Relativgeschwindigkeits-Abstands-Diagramm zu dem späteren Zeitpunkt t=t₀+Δt.

### Beschreibung von Ausführungsbeispielen

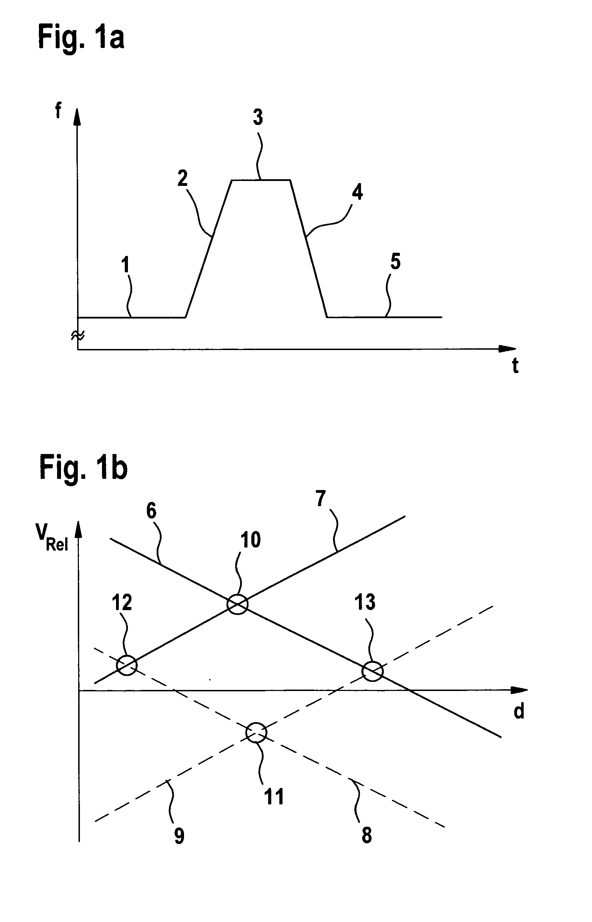

In Figur 1a ist das Frequenz-Zeit-Diagramm eines FMCW-Sendesignals dargestellt, wie es im Stand der Technik beschrieben wurde. Hierzu weist das Sendesignal einen ersten Zeitabschnitt 1 auf, während dem die Sendefrequenz des Radarsignals konstant bleibt. Während einem zweiten Zeitabschnitt 2 steigt die Sendefrequenz des Radarsignals auf eine höhere Frequenz an, verweilt während eines dritten Zeitabschnitts 3 im Bereich der erhöhten Frequenz und fällt in einem vierten Zeitabschnitt 4 wieder auf die ursprüngliche Sendefrequenz des Radarsignals ab, woraufhin die Sendefrequenz wieder konstant bleibt. Hierdurch ergibt sich ein Frequenzprofil über der Zeit, das trapezförmig ausgestaltet ist und neben Zeitabschnitten konstanter Sendefrequenz 1,3,5 sowohl steigende als auch fallende Frequenzrampen 2,4 aufweist. Das ausgesandte Radarsignal wird an Objekten innerhalb des Objektdetektionsbereichs reflektiert und wieder empfangen. Durch die Reflexion der Sendesignale an beweglichen Objekten erfährt die Sendefrequenz eine Dopplerverschiebung, sodass das Empfangssignal gegenüber dem Sendesignal in der Frequenz dopplerverschoben ist. In Zeitbereichen, in denen die Sendefrequenz zeitlich linear ansteigt, also in Zeitabschnitt 2, steigt das Sendesignal in der Frequenz weiter an, sodass infolge der Laufzeitverschiebung des Empfangssignals in Bezug auf das Sendesignal eine zusätzliche Frequenzverschiebung in Folge der rampenförmigen Frequenzerhöhung auftritt. Diese Frequenzverschiebung des Empfangssignals bezüglich des Sendesignals in Folge der Signallaufzeit sowie die Frequenzverschiebung in Folge des Dopplereffekts überlagern sich und sind im Empfangssignal nicht voneinander trennbar. Das Empfangssignal wird im Empfänger mit dem Sendesignal gemischt, woraufhin Zwischenfrequenzen entstehen, die Frequenzverschiebungen fₙ aufweisen. Dieser Frequenzverschiebung fₙ ist eine Kombination von Abstandswerten und Relativgeschwindigkeitswerten zuordenbar und ergibt, wenn man alle möglichen Abstands- und Relativgeschwindigkeitskombinationen in einem Relativgeschwindigkeits-Abstands-Diagramm aufträgt, eine fallende Gerade 6 für die steigender Frequenzrampe 2. Wird das gleiche Objekt bei fallender Frequenzrampe 4 detektiert, so ergibt sich eine unterschiedliche Frequenzverschiebung fₙ, der ebenfalls Kombinationen von Abstandswerten und Relativgeschwindigkeitswerten zugeordnet werden können. Diesen Kombinationen bei fallender Frequenzrampe 4 ergeben im Relativgeschwindigkeits-Abstands-Diagramm der Figur 1b eine steigende Gerade 7. Der Schnittpunkt 10 der fallenden Geraden 6 und der steigenden Geraden 7 ist der Abstand d sowie die Relativgeschwindigkeit vrel des erkannten Objekts entnehmbar. Im Fall dass gleichzeitig zwei Objekte detektiert werden, ergeben sich Zwischenfrequenzen unterschiedlicher Frequenzverschiebungen jeweils für die steigende Frequenzrampe 2, die im Relativgeschwindigkeits-Abstands-Diagramm der Figur 1b als Gerade 6 für das erste Objekt und als gestrichen dargestellte Gerade 8 für das zweite Objekt dargestellt sind. Für die fallenden Frequenzrampen 4 ergeben sich steigende Geraden 7 für das erste Objekt sowie die gestrichen gezeichnete Gerade 9 für das zweite Objekt. Diese vier Geraden 6, 7, 8, 9 weisen im Relativgeschwindigkeits-Abstands-Diagramm der Figur 1b jedoch insgesamt vier Schnittpunkte 10, 11, 12, 13 auf, wovon zwei Schnittpunkte 10 und 11 reale Objekte repräsentieren und die zwei weiteren Schnittpunkte 12 und 13 Scheinobjekte darstellen. Die Entscheidung, welche der Schnittpunkte reale Objekte und welche Scheinobjekte sind, muss in der nachfolgenden Auswertung der Objekte erfolgen, da aufgrund der reinen Schnittpunkte keine Zuordnung möglich ist. Hierzu ist es aus dem Stand der Technik beispielsweise bekannt, ein Objekt-Tracking durchzuführen, bei dem über längere Zeit derartige Objekte erkannt und gespeichert werden und in Folge ihrer Objektbewegung als reale Objekte erkannt werden können oder in Folge von Sprüngen der berechneten Relativgeschwindigkeit oder des Abstandes als Scheinobjekte klassifiziert werden können. Ein Problem dieses Verfahrens ist jedoch, dass bei einer Fahrzeugfolgefahrt mit einem derartigen Radarsystem, bei dem die vorausfahrenden, detektieren Objekte über längere Zeit in etwa den gleichen Abstand und in etwa die gleiche Relativgeschwindigkeit zueinander aufweisen, also in Fahrsituationen, in denen sich die ermittelten Größen vrel und d nur sehr langsam ändern und damit auch die Scheinobjekte der Schnittpunkte 12 und 13 über lange Zeit erhalten bleiben und mittels eines Tracking-Verfahrens nicht als Scheinobjekte identifiziert werden können.

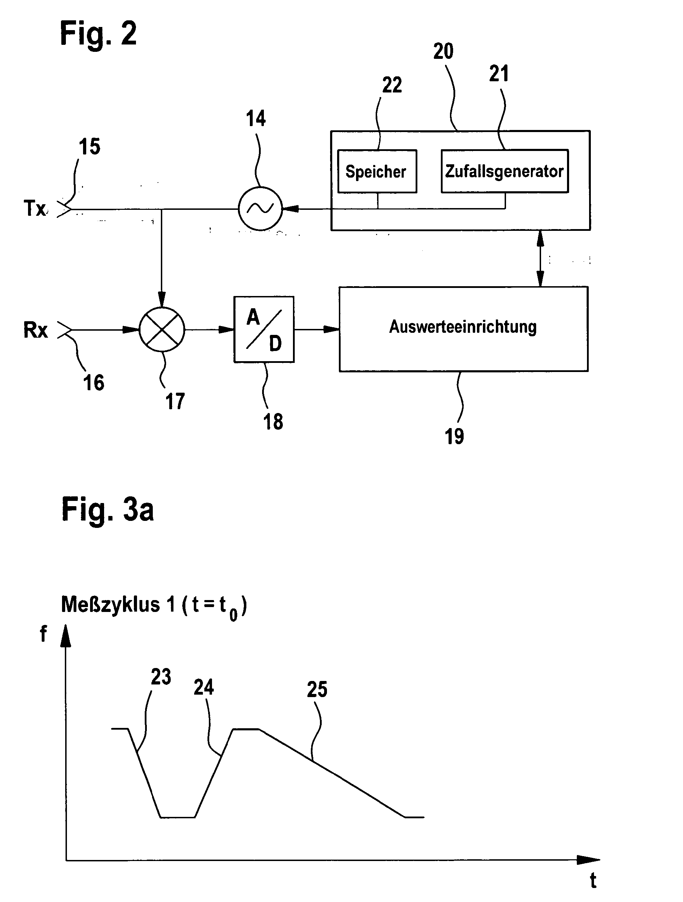

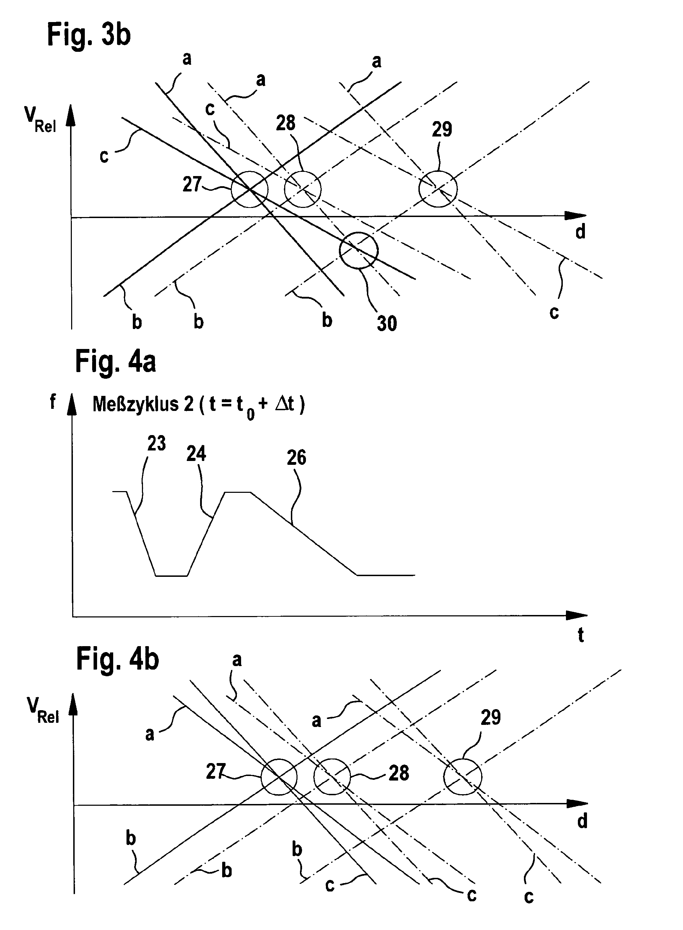

In Figur 2 ist eine Ausführungsform der erfindungsgemäßen Vorrichtung dargestellt. Zu erkennen ist ein Sendeoszillator 14, der Steuersignale einer Steuereinrichtung 20 erhält und der in Folge der ihm zugeführten Steuersignale ein Sendesignal erzeugt. Dieses Sendesignal wird an eine Sendeantenne 15 (Tx) geleitet, die das Sendesignal abstrahlt. Die mittels der Sendeantenne 15 abgestrahlten Sendesignale werden an Objekten innerhalb des Objektdetektionsbereichs reflektiert und die reflektierten Empfangssignale mittels der Empfangsantenne 16 (Rx) empfangen. Selbstverständlich kann diese Vorrichtung auch als monostatischer Radarsensor ausgeführt sein, bei der zum Senden und Empfangen eine einzige Antenne verwendet wird, wobei dann eine Sende- und Empfangsweiche notwendig ist, die die Sendesignale und die Empfangssignale voneinander trennt. Diese monostatische Ausführung des Radarsensors kann beispielsweise mittels eines zusätzlichen Ringmischers realisiert werden. Das Sendesignal des Sendeoszillators 14 sowie des Empfangssignal der Empfangsantenne 16 werden einem Mischer 17 zugeführt, der aus den beiden Eingangssignalen ein Zwischenfrequenzsignal mischt, das in Abhängigkeit des Abstands d und der Relativgeschwindigkeit vrel der detektierten Objekte sowie in Abhängigkeit der Anzahl der erkannten Objekte Frequenzverschiebungen fₙ aufweist. Diese Zwischenfrequenzsignale werden einem Analog-Digital-Wandler 18 zugeführt, der die digitalisierten Zwischenfrequenzsignale fₙ einer Auswerteeinrichtung 19 zuführt. In der Auswerteeinrichtung 19 kann beispielsweise eine Fouriertransformation durchgeführt werden, die ein Spektrum ausgibt, dem die Zwischenfrequenzsignale entnehmbar sind und zur Ermittlung der Relativgeschwindigkeiten vrelₙ und der Abstände dₙ der n erkannten Objekte weiter verarbeitet werden können. Aus der Kenntnis der Steigungen der steigenden Frequenzrampen 2 sowie der fallenden Frequenzrampen 4 sind die Geraden 6 bis 9 des Relativgeschwindigkeits-Abstands-Diagramms berechenbar, woraus auch die Schnittpunkte und die tatsächlichen Abstände dₙ und Relativgeschwindigkeiten vrelₙ der Objekte entnommen werden können. Zur sicheren Unterscheidung zwischen Schnittpunkten der realen Objekte 10, 11 sowie der Schnittpunkte der Scheinobjekte 12, 13 wird erfindungsgemäß mindestens eine Frequenzrampe in ihrer Frequenzsteigung zufällig geändert. Hierzu ist in Figur 3a ein Sendesignal eines ersten Messzykluses zum Zeitpunkt t=t₀ dargestellt, das über drei einzelne Frequenzrampen 23, 24, 25 verfügt. In Figur 3b ist das zugehörige Relativgeschwindigkeits-Abstands-Diagramm dargestellt, das durch die Zwischenfrequenzsignale insgesamt dreier detektierter Objekte erstellt wurde. In Folge der drei Frequenzrampen 23, 24 und 25 ergibt sich für jedes der Objekte 27, 28, 29 ein Schnittpunkt dreier Geraden a, b und c. So werden für die erste Frequenzrampe 23, die an jedem der Objekte reflektiert wird, insgesamt drei Zwischenfrequenzen fₙ erzeugt, die im Diagramm der Figur 3b als Geraden a eingezeichnet sind. Um die Geraden der einzelnen Objekte unterscheiden zu können, wurden diese Geraden durchgezogen, einfach punktiert sowie doppelt punktiert dargestellt. Die zweite Frequenzrampe 24 erzeugt ebenfalls durch die Reflexion an drei Objekten insgesamt drei Geraden, die in Figur 3b als Geraden b eingezeichnet sind. Die dritte Frequenzrampe 25 erzeugt ebenfalls drei Geraden im Diagramm der Figur 3b, die als Geraden c eingezeichnet sind. Die Schnittpunkte jeweils dreier Geraden a, b und c definieren damit die Abstands- und Relativgeschwindigkeitswerte der drei detektierten Objekte 27, 28 und 29. In Folge der vorliegenden Objektkonstellation kommt es jedoch zu einem zusätzlichen Geradenschnittpunkt 30, in dem sich ebenfalls drei Geraden schneiden und der ein Scheinobjekt darstellt. Erfindungsgemäß wird im nächsten Messzyklus 2, der zu einem Zeitpunkt t=t₀+Δt durchgeführt wird, mindestens eine der Frequenzrampen in ihrer Frequenzsteigung verändert. Im vorliegenden Fall wurden die Frequenzrampen 23 und 24, wie in Figur 4a dargestellt, gegenüber dem vorherigen Messzyklus 1 unverändert gelassen, jedoch die dritte Frequenzrampe 25 der Figur 3a wurde in ihrer Steigung verändert, sodass nun eine neue dritte Frequenzrampe 26 entsteht. Diese drei Frequenzrampen werden wiederum ausgestrahlt und an den Objekten 27, 28 und 29 reflektiert. Auch im Relativgeschwindigkeits-Abstands-Diagramm der Figur 4b ergeben sich wiederum Schnittpunkte dreier Geraden a, b, c, die die Abstandswerte und Relativgeschwindigkeitswerte der realen Objekte 27, 28 und 29 repräsentieren. In Folge der zufälligen Änderung der Frequenzsteigung der Frequenzrampe 26 sind jedoch die Geraden c in Figur 4b mit unterschiedlicher Steigung im Vergleich zu den Geraden c der Figur 3b ausgeführt, so dass das zufällig entstandene Scheinobjekt 30 in Figur 4b nicht mehr vorhanden ist. Durch das zufällige Ändern der Frequenzsteigung mindestens einer Frequenzrampe bleiben die Schnittpunkte der realen Objekte 27, 28 und 29 damit über mehrere Messzyklen bestehen, die Schnittpunkte der Scheinobjekte im Relativgeschwindigkeits-Abstands-Diagramm verschwinden jedoch sprunghaft oder es entstehen sprunghaft neue, die jedoch nur für einen Messzyklus detektierbar sind, bis mindestens eine Frequenzrampe wiederum geändert wird. Durch den Vergleich der Schnittpunkte zweier aufeinanderfolgender Meßzyklen in den Diagrammen 3b und 4b ist es daher möglich, zwischen realen Objekten und Scheinobjekten zu unterscheiden, je nachdem, ob die Schnittpunkte von Geraden über mehrere Messzyklen detektierbar sind oder nur für einen Messzyklus messbar sind und nachfolgend verschwinden.

Die Änderung der Frequenzsteigung mindestens einer Frequenzrampe kann hierbei mittels eines Zufallsgenerators 21 und gegebenenfalls eines Speichers 22 erfolgen, wie er in Figur 2 vorgesehen ist. Durch den Zufallsgenerator 21, der Teil der Steuereinrichtung 20 sein kann, wird beispielsweise eine von mehreren in einem Speicher 22 hinterlegten Frequenzsteigungen ausgewählt, in deren Abhängigkeit die Frequenz des Sendeoszillators 14 gesteuert wird. Es ist auch denkbar, dass im Speicher 22 der Steuereinrichtung 20 mehrere Profile an Frequenzsteigungen hinterlegt sind, wobei jedes Profil eine Abfolge mehrerer fallender beziehungsweise steigender Frequenzrampen umfasst. Weiterhin ist es auch denkbar, dass der Zufallsgenerator 21 beliebige Frequenzsteigungen auswählt und diese in beliebiger Reihenfolge zu einem Frequenzprofil eines Messzyklusses zufällig aneinanderreiht, sodass pseudozufällige Frequenzverläufe entstehen, um Scheinobjekte über mindestens zwei Messzyklen sicher identifizieren und eliminieren zu können.

## Patentansprüche

1. Verfahren zur Abstands- und Relativgeschwindigkeitsmessung von mehreren Objekten (27,28,29) mittels eines FMCW-Radars, indem
Sendesignale mit zeitlich linearen Frequenzrampen (23,24,25,26) abgestrahlt werden und die an Objekten (27,28,29) reflektierten Empfangssignale empfangen werden und mit den Sendesignalen gemischt werden
den Mischerausgangsfrequenzen einer jeden Frequenzrampe (24,25,26) für jedes Objekt (27,28,29) eine Kombination von Abstands- und Relativgeschwindigkeitswerten (6,7,8,9) zugeordnet wird
aus Schnittpunkten (27,28,29) mehrerer Abstands- und Relativgeschwindigkeitskombinationen der Abstand (d) und die Relativgeschwindigkeit (vrel) eines möglichen Objekts bestimmt wird, wobei die möglichen Objekte infolge von Mehrdeutigkeiten Scheinobjekte (30) oder reale Objekte (27,28,29) sein können,
**dadurch gekennzeichnet, dass** die Scheinobjekte (30) eliminierbar sind, indem in einem darauf folgenden Messzyklus die Frequenzsteigung mindestens einer Frequenzrampe (29) nach dem Zufallsprinzip geändert wird.

2. Verfahren nach Anspruch 1, **dadurch gekennzeichnet, dass** die Änderung der Frequenzsteigung der mindestens einen Frequenzrampe (26) derart erfolgt, dass aus mehreren vorgegebenen Frequenzsteigungen zufällig eine Frequenzsteigung ausgewählt wird.

3. Verfahren nach Anspruch 1 oder 2, **dadurch gekennzeichnet, dass** die Frequenzsteigungen aller Frequenzrampen (23,24,25,26) des Sendesignals nach dem Zufallsprinzip ausgewählt werden.

4. Verfahren nach einem der vorhergehenden Ansprüche, **dadurch gekennzeichnet, dass** mehrere Frequenzsteigungsmuster für Messzyklen abgespeichert sind, und nach dem Zufallsprinzip eines der Frequenzsteigungsmuster ausgewählt wird.

5. Verfahren nach einem der vorhergehenden Ansprüche, **dadurch gekennzeichnet, dass** das Verfahren in einem Kraftfahrzeug zur adaptiven Abstandsregelung und/oder zur Auslösung einer automatischen Notbremsung verwendet wird.

6. Vorrichtung zur Abstands- und Relativgeschwindigkeitsmessung von mehreren Objekten,
wobei ein FMCW-Radarsensor (14,15,16,17,18) vorgesehen ist, der Sendesignale mit zeitlich linearen Frequenzrampen abstrahlt und die an Objekten reflektierten Empfangssignale empfängt und mit den Sendesignalen mischt (17) und
wobei eine Auswerteeinrichtung (19) vorgesehen ist, der die Mischerausgangssignale zugeführt werden, die den Mischerausgangsfrequenzen einer jeden Frequenzrampe für jedes Objekt eine Kombination von Abstands- und Relativgeschwindigkeitswerten zuordnet und die Schnittpunkte mehrerer Abstands- und Relativgeschwindigkeitskombinationen ermittelt, wobei die möglichen Schnittpunkt Objekte repräsentieren, die infolge von Mehrdeutigkeiten Scheinobjekte (30) oder reale Objekte (27,28,29) sein können,
**dadurch gekennzeichnet, dass** in der Auswerteeinrichtung (19) ein Zufallsgenerator (21) vorgesehen ist, der zur Eliminierung der Scheinobjekte (30) für den darauf folgenden Messzyklus die Frequenzsteigung mindestens einer Frequenzrampe (25,26) nach dem Zufallsprinzip ändert.

7. Vorrichtung nach Anspruch 6, **dadurch gekennzeichnet, dass** die Änderung der Frequenzsteigung der mindestens einen Frequenzrampe derart erfolgt, dass aus mehreren in einem Speicher (22) abgespeicherten Frequenzsteigungen mittels des Zufallsgenerators (21) eine Frequenzsteigung ausgewählt wird.

8. Vorrichtung nach Anspruch 6 oder 7, **dadurch gekennzeichnet, dass** die Frequenzsteigungen aller Frequenzrampe des Sendesignals mittels des Zufallsgenerators (21) ausgewählt werden.

9. Vorrichtung nach einem der Ansprüche 6 bis 8, **dadurch gekennzeichnet, dass** in einem Speicher (22) mehrere Frequenzsteigungsmuster für Messzyklen abgespeichert sind, und mittels des Zufallsgenerators (21) eines der Frequenzsteigungsmuster ausgewählt wird

10. Vorrichtung nach einem der Ansprüche 6 bis 9, **dadurch gekennzeichnet, dass** die Vorrichtung an einem Kraftfahrzeug zur adaptiven Abstandsregelung und/oder zur Auslösung einer automatischen Notbremsung befestigt ist.

## Claims

1. Method for measuring distance and relative speed for a plurality of objects (27, 28, 29) using an FMCW radar by virtue of
transmitted signals with chronologically linear frequency ramps (23, 24, 25, 26) being emitted and the received signals reflected from objects (27, 28, 29) being received and being mixed with the transmitted signals,
the mixer output frequencies for each frequency ramp (24, 25, 26) for each object (27, 28, 29) are assigned a combination of distance and relative speed values (6, 7, 8, 9),
points of intersection (27, 28, 29) for a plurality of distance and relative speed combinations are used to determine the distance (d) and the relative speed (vrel) of a possible object, the possible objects possibly being apparent objects (30) or real objects (27, 28, 29) as a result of ambiguities,
**characterized in that** the apparent objects (30) can be eliminated by using a subsequent measurement cycle to change the frequency gradient of at least one frequency ramp (29) on the basis of the random principle.

2. Method according to Claim 1, **characterized in that** the frequency gradient of the at least one frequency ramp (26) is changed such that one frequency gradient is selected at random from a plurality of prescribed frequency gradients.

3. Method according to Claim 1 or 2, **characterized in that** the frequency gradients of all frequency ramps (23, 24, 25, 26) in the transmitted signal are selected on the basis of the random principle.

4. Method according to one of the preceding claims, **characterized in that** a plurality of frequency gradient patterns are stored for measurement cycles, and the random principle is taken as a basis for selecting one of the frequency gradient patterns.

5. Method according to one of the preceding claims, **characterized in that** the method is used in a motor vehicle for the purpose of adaptive distance regulation and/or for the purpose of triggering automatic emergency braking.

6. Apparatus for measuring distance and relative speed for a plurality of objects,
wherein an FMCW radar sensor (14, 15, 16, 17, 18) is provided which emits transmitted signals with chronologically linear frequency ramps and receives the received signals reflected from objects and mixes them with the transmitted signals (17), and
wherein an evaluation device (19) is provided which is supplied with the mixer output signals, which assigns a combination of distance and relative speed values to the mixer output frequencies for each frequency ramp for each object and which ascertains points of intersection for a plurality of distance and relative speed combinations, the possible points of intersection representing objects which may be apparent objects (30) or real objects (27, 28, 29) as a result of ambiguities,
**characterized in that** the evaluation device (19) contains a random number generator (21) which changes the frequency gradient of at least one frequency ramp (25, 26) on the basis of the random principle in order to eliminate the apparent objects (30) for the subsequent measurement cycle.

7. Apparatus according to Claim 6, **characterized in that** the frequency gradient of the at least one frequency ramp is changed such that one frequency gradient is selected from a plurality of frequency gradients stored in a memory (22) using the random number generator (21).

8. Apparatus according to Claim 6 or 7, **characterized in that** the frequency gradients of all frequency ramps in the transmitted signal are selected using the random number generator (21).

9. Apparatus according to one of Claims 6 to 8, **characterized in that** a memory (22) stores a plurality of frequency gradient patterns for measurement cycles, and the random number generator (21) is used to select one of the frequency gradient patterns.

10. Apparatus according to one of Claims 6 to 9, **characterized in that** the apparatus is mounted on a motor vehicle for the purpose of adaptive distance regulation and/or for the purpose of triggering automatic emergency braking.

## Revendications

1. Procédé de mesure de la distance et de la vitesse relative de plusieurs objets (27, 28, 29) au moyen d'un radar FMCW, dans lequel
des signaux émis sont émis avec des rampes de fréquence (23, 24, 25, 26) linéaires dans le temps et les signaux reçus réfléchis sur les objets (27, 28, 29) sont reçus et mélangés avec les signaux émis,
une combinaison de valeurs de la distance et de la vitesse relative (6, 7, 8, 9) est associée aux fréquences de sortie du mélangeur de chaque rampe de fréquence (24, 25, 26) pour chaque objet (27, 28, 29),
la distance (d) et la vitesse relative (vrel) d'un objet possible sont déterminées à partir des points d'intersection (27, 28, 29) de plusieurs combinaisons de distance et de vitesse relative, les objets possibles, du fait de l'ambigüité, pouvant être des objets factices (30) ou des objets réels (27, 28, 29),
**caractérisé en ce que** les objets factices (30) peuvent être éliminés en modifiant la pente de fréquence d'au moins une rampe de fréquence (29) selon le principe du hasard dans un cycle de mesure qui suit.

2. Procédé selon la revendication 1, **caractérisé en ce que** la modification de la pente de fréquence de l'au moins une rampe de fréquence (26) est effectuée de telle sorte qu'une pente de fréquence est sélectionnée aléatoirement parmi plusieurs pentes de fréquence prédéfinies.

3. Procédé selon la revendication 1 ou 2, **caractérisé en ce que** les pentes de fréquence de toutes les rampes de fréquence (23, 24, 25, 26) du signal émis sont sélectionnées selon le principe du hasard.

4. Procédé selon l'une des revendications précédentes, **caractérisé en ce que** plusieurs modèles de pente de fréquence sont enregistrés pour les cycles de mesure et l'un des modèles de pente de fréquence est sélectionné selon le principe du hasard.

5. Procédé selon l'une des revendications précédentes, **caractérisé en ce que** le procédé est utilisé dans un véhicule automobile pour la régulation adaptative de la distance et/ou pour déclencher un freinage d'urgence automatique.

6. Dispositif de mesure de la distance et de la vitesse relative de plusieurs objets
un capteur à radar FMCW (14, 15, 16, 17, 18) étant prévu, lequel émet les signaux émis avec des rampes de fréquence linéaires dans le temps et reçoit les signaux reçus réfléchis sur les objets et les mélange (17) avec les signaux émis, et
un dispositif d'interprétation (19) étant prévu, auquel sont acheminés les signaux de sortie mélangés et qui associe une combinaison de valeurs de la distance et de la vitesse relative aux fréquences de sortie du mélangeur de chaque rampe de fréquence pour chaque objet et détermine les points d'intersection de plusieurs combinaisons de distance et de vitesse relative, les points d'intersection possibles représentant des objets qui, du fait de l'ambigüité, peuvent être des objets factices (30) ou des objets réels (27, 28, 29),
**caractérisé en ce qu'**un générateur de nombres aléatoires (21) est prévu dans le dispositif d'interprétation (19), lequel modifie la pente de fréquence d'au moins une rampe de fréquence (25,26) selon le principe du hasard pour éliminer les objets factices (30) pendant le cycle de mesure qui suit.

7. Dispositif selon la revendication 6, **caractérisé en ce que** la modification de la pente de fréquence de l'au moins une rampe de fréquence est effectuée de telle sorte qu'une pente de fréquence est sélectionnée au moyen du générateur de nombres aléatoires (21) parmi plusieurs pentes de fréquence enregistrées dans une mémoire (22).

8. Dispositif selon la revendication 6 ou 7, **caractérisé en ce que** les pentes de fréquence de toutes les rampes de fréquence du signal émis sont sélectionnées au moyen du générateur de nombres aléatoires (21).

9. Dispositif selon l'une des revendications 6 à 8, **caractérisé en ce que** plusieurs modèles de pente de fréquence sont enregistrés dans une mémoire (22) pour les cycles de mesure et l'un des modèles de pente de fréquence est sélectionné au moyen du générateur de nombres aléatoires (21).

10. Dispositif selon l'une des revendications 6 à 9, **caractérisé en ce que** le dispositif est utilisé dans un véhicule automobile pour la régulation adaptative de la distance et/ou pour déclencher un freinage d'urgence automatique.
